Europäisches Patentamt

European Patent Office

Office européen des brevets

(11) Publication number: **0 321 730 B1**

# EUROPEAN PATENT SPECIFICATION

(45) Date of publication of patent specification: **08.01.92**  (51) Int. Cl.⁵: **B60C 11/00**

(21) Application number: **88119709.9**

(22) Date of filing: **25.11.88**

(54) Low profile radial tyre.

(30) Priority: **30.11.87 JP 183295/87**

(43) Date of publication of application:
**28.06.89 Bulletin 89/26**

(45) Publication of the grant of the patent:
**08.01.92 Bulletin 92/02**

(84) Designated Contracting States:
**DE FR GB**

(56) References cited:
**EP-A- 0 205 233**
**EP-A- 0 273 056**
**DE-A- 2 644 452**

**PATENT ABSTRACTS OF JAPAN, vol. 8. no. 244 (M-337)[1681], 9th November 1984; & JP-A-59 124 406 (YOKOHAMA GOMU K.K.) 18-07-1984**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Kajita, Hiroaki**
**1-23, Hinokuchicho 1-chome**
**Nishinomiya-shi Hyogo-ken(JP)**

(74) Representative: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a radial tyre having a low profile which is improved in grip performance and steering stability at high speed running by making the shape of the ground contacting area of the tread proper.

Recently, owing to high speed of motor vehicles, the tyres for motor vehicles have been required to be improved in characteristics under high speed running such as steering stability, road grip, ride feeling and the likes, whereby the spread of low profile tyres has been encouraged.

When the aspect ratio of tyre is lowered, the tyre width becomes large. Therefore, for example in a tyre having aspect ratio of 45 to 55 %, the ground contacting width thereof becomes extremely large, so that the shape of the ground contacting area of the tread, which is formed when the running tyre contacts with the ground, has much influence on the above-mentioned characteristics.

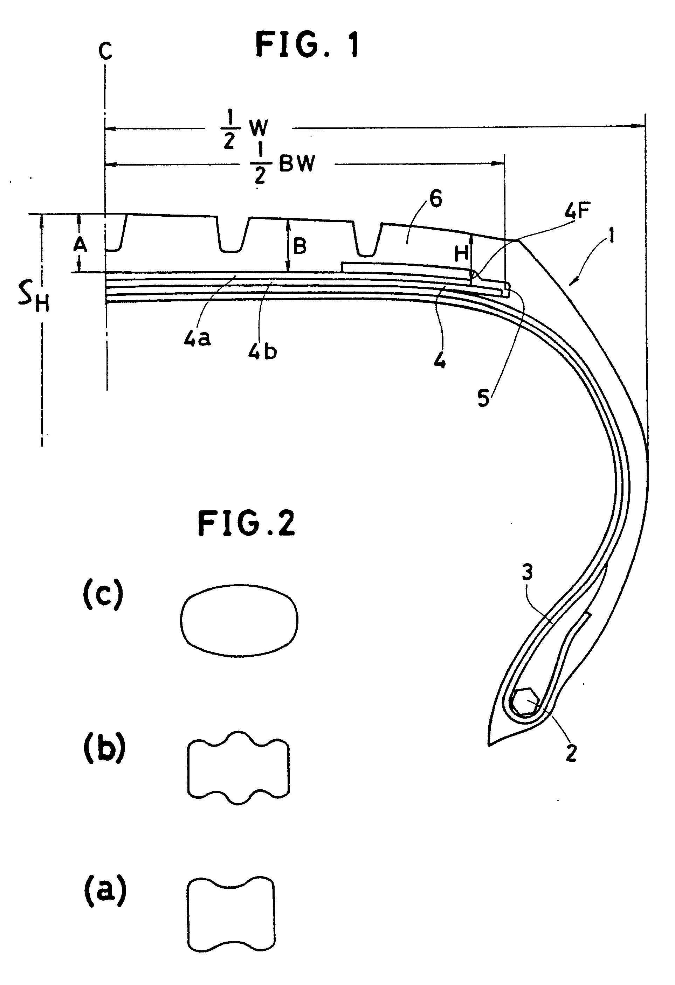

The shapes of the ground contacting areas are classified into typical shapes of E type, F type and D type as respectively shown in Figs.2(a), (b) and (c) although, in practice, an actual tyre may present a shape recoginized as a intermediate of the above-mentioned typical shapes. In the above-mentioned typical shapes, the E type is recognized to be worst, and the D type is recognized to be best.

Heretofore, there have been many kinds of difficult problems in betterment in the ground contacting area shape. This is because, according to the tyre construction and the structural materials used therein, the tyre profile makes a complicated change from a designed profile when the tyre is in a mould to the profile when the tyre is inflated, and especially in case of a low profile tyre, the change becomes extreme in each side region of the tread. A tire according to the preamble of claim 1 is known, e.g. from JP-A-59 124 406.

It is therefore, an object of the present invention to provide a low profile radial tyre, and more particularly a radial tyre having an aspect ratio of 45 to 55 %, which can present a proper ground contacting area shape by arranging the amount of change from the mould profile to the inflated profile. This object is achieved by the features of claim 1.

According to the present invention, a low profile radial tyre comprises a carcass turned up in both edge portions around a pair of left and right bead cores, and a belt disposed outside the carcass, and the rubber thickness from the outermost ply of the belt to the surface of the tread decreases gradually from the tyre equator toward both edges of the belt; and the rubber thickness H at each edge position of the outermost ply of the belt, the rubber thickness A at the tyre equator, and the rubber thickness B at the middle position between the tyre equator and each edge position of the outermost ply are satisfy the following relationship: the difference (A-B) and the difference (B-H) are respectively in a range of 3 to 14 % and in a range of 14 to 26 % of the thickness H.

An embodiment of the present invention will now be described in detail by way of example only with reference to the accompanying drawing, in which:

Fig. 1 is a right-half cross sectional view showing an embodiment of the present invention; and

Figs. 2(a) and (c) are diagrammatic views showing typical shapes of the ground contacting areas.

In the tyre 1 of Fig.1, the carcass 3 of a radial construction is turned up in both edge portions around a pair of bead cores 2, and the carcass has organic fiber cords, such as polyester, rayon, nylon or aromatic polyamide, which are laid at 70 to 90 degrees to the circumferential direction of the tyre. The belt 4 having two plies of rubberized high elastic modulus cords such as steel cords or aromatic polyamide fiber cords is disposed radially outside the carcass, and the cords thereof are laid at 10 to 30 degrees, more preferably, 20 to 25 degrees to the circumferential direction of the tyre.

The width BW of the belt 4 is set to be 70 to 80 % of the section width W of the tyre.

Preferably, the aspect ratio of the tyre, which is defined as the ratio SH/W of the tyre section height SH to the tyre section width W, is set in a range of 45 to 55%.

The rubber thickness from the outermost ply 4a of the belt 4 to the tread surface is decreased gradually from the tyre equator C toward the belt edge.

In the case of tyre size 245/50R 14.5,

the rubber thickness (A) at the tyre equator is 13 to 15mm, the rubber thickness (B) at the middle position between the tyre equator C and the edge position 4F of the outermost ply 4a is 12 to 14 mm,

the rubber thickness (H) at the edge position 4F of the outermost ply is 9 to 12 mm,

the difference (A-B) is 0.3 to 1.4 mm (3 to 14 % of the rubber thickness (H) at the edge position 4F of the outermost ply), and

the difference (B-H) is 1.4 to 2.6 mm (14 to 26 % of H).

The reason why the difference (B-H) of B from H is set to be larger than the difference (A-B) of A from B is that, in a low profile tyre of this kind, the lifting (radially outward movement) of the tread, when the tyre is inflated, is larger in the belt edge portions rather than in the center portion.

By setting the tread rubber thickness in such manner, the tread surface of the inflated tyre becomes rounded, that is, the radius of curveture of the tread surface is decreased as the tyre is inflated, which can optimize the shape of the ground contacting area when the tyre is inflated.

In the conventional tyres, the edge portions of the belt are lifted (are moved radially outward) as the tyre is inflated because the tread rubber thickness is set to be substantially constant throughout the portion from the tyre equator to the belt ply edges. As the result, the contact pressure of the tread edge portions becomes high, and the shape of the ground contacting area becomes E or F type.

In the present invention, by arranging the tread rubber in the above-mentioned thickness distribution, it becomes possible to round the tread curvature to show the D type shape.

When the differences A-B and B-H are under 3% of H and under 14% of H, respectively, they have no effect on rounding the tread curvature. On the other hand, when they are over 14% and 26% respectively, the contact pressure of the tread becomes uneven, and therefore, it becomes impossible to optimize the ground contacting area shape.

In order to further reduce the amount of the lifting of the belt edge portions, the tyre 1 is also provided with bands 5. The bands are disposed one on each edge regions of the radially outside of the belt 4, and each band is composed of organic fiber cords arranged in substantially parallel with the circumferential direction of the tyre.

For working example tyres of the present invention and reference tyres, there were made various kinds of test tyres of size 245/50R 14.5, of which cross-sectional tyre structure and specifications are shown in Fig. 1 and Table 1, respectively.

The test tyres were tested for the ground contacting area shape, that is, such shape presented by each test tyre was observed and classified according to the above-explained typical shapes, and the test results are also shown in Table 1.

Each test tyre comprises a radial carcass composed of one ply of polyester cords laid at 90 degrees to the circumferential direction of the tyre, and a belt composed of two ply of steel cords, and the aspect ratio SH/W and the ratio BW/W of the belt width to the tyre section width W thereof are 48% and 77%, respectively.

TABLE 1

| | Working Ex. tyres : | | | Reference tyres | | | | | | | |
|---|---|---|---|---|---|---|---|---|---|---|---|
| | 1 | 2 | 3 | 1 | 2 | 3 | 4 | 5 | 6 | 7 | 8 |
| A-B (mm) | 0.6 | 0.5 | 1.3 | 0.5 | 0.6 | 0.5 | 1.4 | 1.1 | 2.5 | 2.0 | 0.1 |
| (A-B)/H X100 (%) | 6 | 5 | 13 | 5 | 6 | 5 | 14 | 11 | 25 | 20 | 1 |
| B-H (mm) | 1.7 | 2.0 | 2.0 | 0.6 | 0.7 | 1.1 | 0.5 | 0.9 | 1.8 | 2.0 | 2.4 |
| (B-H)/H X100 (%) | 17 | 20 | 20 | 6 | 7 | 11 | 5 | 9 | 18 | 20 | 24 |
| Ground contacting area shape | D | D | D | E | E | E | F | F | F | E | F |

From Table 1, it is apparent that Working Example tyres 1-3 in which (A-B)/H and (B-H)/H are respectively in the range of 3 to 14% and in the range of 14 to 26, presented the D type shape, and their tread profile were optimized.

As previously explained, in the present invention, the rubber between the tread surface and the outermost belt ply is so formed that the thickness thereof is decreased gradually from the tyre equator toward both edges of the belt, and the thickness distribution falls in a specific range. Accordingly, it become possible to round the tread surface when the tyre is inflated to optimize the shape of the ground contacting area of the tread. As the result, the tyre characteristics which are influenced by ground contacting area shape, such as road grip, steering stability and the likes at high speed running are improved.

**Claims**

1.   A low profile radial tyre (1), comprising
   a pair of bead cores (2) one disposed in each bead of the tyre,
   a carcass (3) turned up in both edge portions around said bead cores,
   a belt ply (4) disposed radially outside said carcass, and
   a rubber tread disposed on the radially outside of said belt ply defining its thickness as a distance

3

from said outside of the belt ply to its outer surface,

said thickness of the tread decreased gradually from the tyre equator (C) toward both edges of said belt ply characterized in that the decrease of said thickness satisfies the following two relationships:

the value of (A-B)/H x100 is in a range of 3 to 14 and

the value of (B-H)/H x100 is in a range of 14 to 26 wherein

A is the thickness at the tyre equator (C),

H is the thickness at each edge of the belt ply (4), and

B is the thickness at the middle position between the tyre equator and each edge of the belt ply.

2. A low profile radial tyre of claim 1, wherein the aspect ratio SH/W of the tyre is in a range of 45 to 55%.

**Revendications**

1. Pneumatique radial (1) à profil bas, comprenant:

une paire d'âmes de talons (2) disposée chacune dans l'un des talons du pneumatique,

une carcasse (3) entourant lesdites âmes de talon dans les deux parties de flanc,

une nappe de ceinture (4) disposée radialement à l'extérieur de ladite carcasse, et

une bande de roulement en caoutchouc disposée radialement à l'extérieur de ladite nappe de ceinture et dont l'épaisseur est définie comme la distance entre l'extérieur de la nappe de ceinture et sa propre surface extérieure,

ladite épaisseur de la bande de roulement décroissant régulièrement depuis l'équateur (C) du pneumatique en direction des deux bordures de ladite nappe de ceinture,

caractérisé en ce que la décroissance de ladite épaisseur satisfait aux deux équations suivantes:

le quotient (A-B)/Hx100 est compris entre 3 et 14, et

le quotient (B-H)/Hx100 est compris entre 14 et 26, où:

A est l'épaisseur à l'équateur du pneumatique,

H est l'épaisseur à chacune des bordures de la nappe de ceinture (4), et

B est l'épaisseur à la position médiane entre l'équateur du pneumatique et chaque bordure de la nappe de ceinture.

2. Pneumatique radial à profil bas selon la revendication 1, caractérisé en ce que le rapport d'aspect $S_H/W$ du pneumatique est compris entre 45 et 55 %.

**Patentansprüche**

1. Radialreifen (1) mit niedrigem Querschnittsprofil, welcher umfaßt

ein Paar Wulstkerne (2), von denen je einer in jedem Wulst des Reifens angeordnet ist,

eine in beiden Kantenabschnitten jeweils um die Wulstkerne hochgeschlagene Karkasse (3),

eine radial außerhalb der Karkasse angeordnete Gürtellage (4), und

einen Gummi-Laufstreifen, der an der radial äußeren Seite der Gürtellage angeordnet ist und seine Dicke als Abstand von der Außenseite der Gürtellage bis zu seiner Außenfläche bestimmt,

wobei die Dicke des Laufstreifens vom Reifenäquator (C) zu den beiden Kanten der Gürtellage hin allmählich vermindert ist,

dadurch gekennzeichnet,

daß die Verminderung der Dicke der Gürtellage die folgenden Beziehungen erfüllt:

der Wert (A-B)/H x100 liegt in einem Bereich von 3 bis 14, und

der Wert (B-H)/H x100 liegt in einem Bereich von 14 bis 26, wobei

A die Dicke am Reifenäquator (C),
H die Dicke an den Kanten der Gürtellage (4), und
B die Dicke in der mittleren Position zwischen dem Reifenäquator und der jeweiligen Kante der Gürtellage ist.

2. Radialreifen mit niedrigem Querschnittsprofil nach Anspruch 1, bei dem das Querschnittsverhältnis $(S_H/W)$ des Reifens in einem Bereich von 45 bis 55% liegt.

# FIG. 1

# FIG.2

(c)

(b)

(a)